# EUROPEAN PATENT APPLICATION

(11) **EP 1 804 403 A2**
(43) Date of publication of application: **04.07.2007**
(21) Application number: 06120650.4
(22) Date of filing: 14.09.2006
(51) Int. Cl.: H04H 1/00

(54) **broadcast receiving apparatus and method for storing digital multimedia broadcast audio data**

(30) Priority: 02.01.2006 KR 20060000159
(71) Applicant: SAMSUNG ELECTRONICS CO., LTD., Suwon-si Gyeonggi-do 442-742 (KR)
(72) Inventor: AHN, Young-joon, Gyeonggi-do (KR); Hwang, Cheol-ju, Gyeonggi-do (KR)
(74) Representative: Davies, Robert Ean

(57) **Abstract**

A broadcasting receiving apparatus and method for storing digital multimedia broadcasting (DMB) audio data are provided. The apparatus includes: a broadcasting receiver processing a received digital multimedia broadcasting signal; a controller determining a time when music and speech of audio data received via the digital multimedia broadcasting signal are separated from each other as a turning point; a storage buffer temporarily storing audio data received after the turning point is determined; a storage unit storing the audio data temporarily stored in the storage buffer; and a user interface receiving a user input signal requesting recording of the audio data and transferring the user input signal to the controller, wherein the controller stores the audio data temporarily stored in the storage buffer in the storage unit after receiving the user input signal from the user interface. When a user stores digital multimedia broadcasting audio data, the user can effectively store desired audio data only using the broadcasting receiving apparatus and method.

## Description

The present invention relates to a digital multimedia broadcasting receiving apparatus and method, and more particularly but not exclusively, to a broadcasting receiving apparatus and method for storing digital multimedia broadcasting audio data.

Digital audio broadcasting (DAB) provides a variety of additional data services such as weather, traffic, entertainment, and image data as well as a CD quality audio service using the latest sound coding method with a high compression ratio. Digital multimedia broadcasting (DMB) is a progression from DAB.

A user can record audio data from DAB and DMB. However, the user cannot record audio data output by a broadcasting receiving apparatus. For example, the user can record audio data after pressing a recording button of the broadcasting receiving apparatus. Therefore, when the user records audio broadcast data, the user can record undesired sections of the audio broadcast data, i.e., unnecessary voice data between songs or during songs. In particular, when the user travels, since it is difficult to operate the broadcasting receiving apparatus, the user cannot record desired audio data.

Embodiments of the present invention aim to provide a broadcasting receiving apparatus and method for effectively storing desired audio data when a user records digital multimedia broadcasting audio data.

Embodiments of the present invention also aim to provide a broadcasting receiving apparatus and method for transforming a recorded digital multimedia broadcasting audio data file so as to be easily reproduced by an MP3 player.

According to an aspect of the present invention, there is provided a broadcasting receiving apparatus storing digital multimedia broadcasting (DMB) audio data, the apparatus comprising: a broadcasting receiver processing a received digital multimedia broadcasting signal; a controller determining a time when music and speech of audio data received via the digital multimedia broadcasting signal are separated from each other as a turning point; a storage buffer temporarily storing audio data received after the determined turning point; a storage unit storing the audio data temporarily stored in the storage buffer; and a user interface receiving a user input signal requesting recording of the audio data and transferring the user input signal to the controller, wherein the controller stores the audio data temporarily stored in the storage buffer in the storage unit after receiving the user input signal from the user interface.

The controller may determine a time when music/speech (M/S) flags included in F-PAD of an audio stream transmitted via the digital multimedia broadcasting signal are changed as the turning point.

The broadcasting receiver may decode the audio data, and the controller may determine a time when mute data is temporarily output from the decoded audio data as the turning point.

The controller may control the storage unit to store audio data output by the broadcasting receiver after receiving the user input signal requesting recording of the audio data from the user interface.

The controller may write the determined turning point, provide information on the written turning point to a user to select a recording start point of the audio data, receives a selection signal for selecting the recording start point of the audio data, and stores the audio data in the storage unit based on the selection signal.

When the selection signal for selecting the recording start point of the audio data is received from the user interface, the controller may store the audio data temporarily stored in the storage buffer from the recording start point of the audio data to a present time to the storage unit, and store audio data received by the broadcasting receiver from the present time in the storage unit.

The controller may write the determined turning point during the recording of audio data, provides information on the written turning point to the user to select a recording end point of the audio data, receive a selection signal for selecting the recording end point of the audio data, and delete audio data stored in the storage unit after the selected recording end point.

The recording of the audio data may be identified by the turning point.

The controller may add an MP3 file extension to a file of the audio data temporarily and stores the audio data file with the MP3 file extension in the storage unit.

According to another aspect of the present invention, there is provided a method of storing digital multimedia broadcasting (DMB) audio data, the method comprising: determining a time when music and speech of the digital multimedia broadcasting audio data received are separated from each other as a turning point; temporarily storing audio data received after the turning point is determined; and if a user input signal requesting recording of the audio data is received, storing the temporarily stored audio data.

For a better understanding of the invention, and to show how embodiments of the same may be carried into effect, reference will now be made, by way of example, to the accompanying diagrammatic drawings in which:
FIG. 1 is a block diagram illustrating a broadcasting receiving apparatus for storing digital multimedia broadcasting (DMB) audio data according to an embodiment of the present invention;
FIG. 2 illustrates multiplexing of data for audio service, packet data for data service, and data for video service to a main service channel (MSC);
FIG. 3 illustrates program associated data (PAD) included in the data for audio service;
FIG. 4 illustrates a fixed-program associated data (F-PAD) field of a DMB transmission frame according to an embodiment of the present invention;
FIG. 5 is a flowchart illustrating a method of storing DMB audio data in the broadcasting receiving apparatus illustrated in FIG. 1 according to an embodiment of the present invention; and
FIG. 6A and 6B are flowcharts illustrating a method of storing DMB audio data in the broadcasting receiving apparatus illustrated in FIG. 1 according to another embodiment of the present invention.

Hereinafter, exemplary embodiments of the present invention will be described in detail with reference to the attached drawings.

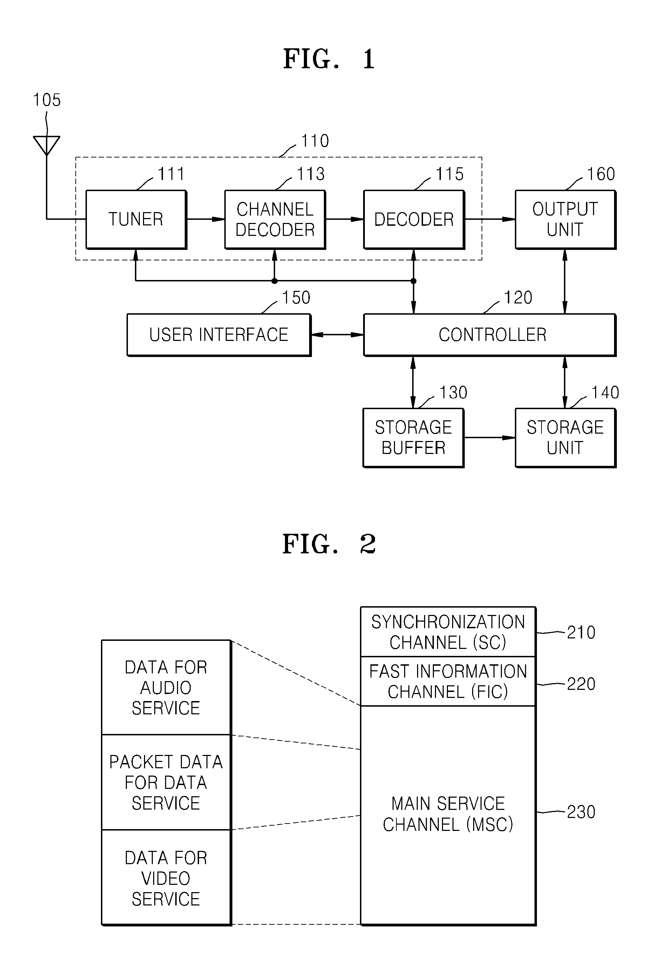

FIG. 1 is a block diagram illustrating a broadcasting receiving apparatus for storing digital multimedia broadcasting (DMB) audio data according to an embodiment of the present invention. Referring to FIG. 1, the broadcasting receiving apparatus includes an antenna 105, a broadcasting receiver 110, a controller 120, a storage buffer 130, a storage unit 140, a user interface 150, and an output unit 160.

The broadcasting receiver 110 includes a tuner 111, a channel decoder 113, and a decoder 115, and processes a received digital broadcasting signal. The tuner 111 tunes one of a plurality of channels and outputs one of a plurality of digital broadcasting signals received via the antenna 105.

The channel decoder 113 decodes a channel using a specific method. The channel decoder 113 converts an analog broadcasting signal to a digital signal, performs OFDM demodulation, time de-interleaving, viterbi decoding, and Reed-Solomon decoding, generates an MPEG-2 transmission stream, and transfers the MPEG-2 transmission stream to the decoder 115. The decoder 115 demultiplexes the MPEG-2 transmission stream, and divides the demultiplexed MPEG-2 transmission stream into a video stream, an audio stream, and a data stream. The decoder 115 includes a plurality of video decoders, an audio decoder, and a data decoder, and decodes the video stream, the audio stream, and the data stream, respectively. The decoder 115 can analyze fixed-program associated data (F-PAD) of the audio stream.

The controller 120 determines a time when music and speech are separated from each other as a turning point with respect to the DMB audio data included in audio data received through DMB. The controller 120 writes the turning point. When the audio data is stored in the storage buffer 130, the controller 120 writes the turning point in the storage buffer 130. When the audio data is stored in the storage unit 140, the controller 120 writes the turning point in the storage unit 140.

The controller 120 can determine the turning point as a time when music/speech flags (M/S flags) included in the F-PAD of the audio data transmitted via the DMB signal are changed using the F-PAD analyzed by the broadcasting receiver 110. An F-PAD field will be described later with reference to FIGS. 2 through 4. When M/S flags are not received, the controller 120 detects mute data when the broadcasting receiver 110 decodes the audio stream, and determines a time when the mute data is output as the turning point. For example, when a disc jockey plays music while speaking during an audio broadcast, audio is temporarily output as the mute data. The controller 120 determines a broadcasting service that receives the M/S flags at least once via the broadcasting service as a broadcasting service that provides the M/S flags.

When the audio data is not recorded, and the controller 120 determines the turning point while receiving the DMB signal, the controller 120 stores temporarily audio data received after the determined turning point in the storage buffer 130. When the controller 120 receives a user input signal that requests the recording of the audio data through the user interface 150, the controller 120 stores the audio data temporarily stored in the storage buffer 130 in the storage unit 140. The controller 120 stores audio data output from the broadcasting receiver 110 after receiving the user input signal that requests the recording of the audio data in the storage unit 140 without the storage buffer 130.

The user interface 150 receives a user input signal that requests the recording of audio data or sets a recording section from a user including a touch screen or a button, and transfers the user input signal to the controller 120. The controller 120 writes the turning point in the storage buffer 130 when the user does not send a recording command, and writes the turning point to the storage unit 140 when the user sends the recording command. The controller 120 provides information to the user on the written turning point, to a screen through the output unit 160 so that the user can select a recording start point and/or recording end point of the audio data.

When the user inputs a selection signal to select the recording start point of the audio data using the user interface 150, the controller 120 stores the audio data after the recording start point of the audio data in the storage unit 140. When the user inputs a selection signal to select the recording end point of the audio data during the recording of the audio data, the controller 120 deletes audio data stored after the recording end point from the storage unit 140. Therefore, the user can store desired audio data only.

The broadcasting receiving apparatus of an embodiment of the present invention temporarily stores audio data when the turning point is determined, and stores the temporarily stored audio data in the storage unit 140 when the user requests recording of the audio data. Therefore, the user can completely record desired music being received although pressing the recording button after the music starts. The controller 120 controls so that audio data after the user requests recording of the audio data from the broadcasting receiver 110 to the storage unit 140. The broadcasting receiving apparatus starts to record the audio data from the determined turning point. Also, the broadcasting receiving apparatus records the audio data until the record end point is input by user or predetermined time is expired. Therefore, the recording of the audio data can be identified by the turning point.

When the broadcasting receiving apparatus stores the audio data in the storage unit 140, the controller 120 adds an MP3 (MPEG1-Layer 3) file extension to an audio data file. The audio data is usually in the form of an MP2 file. The MP2 file can be reproduced in a reproducer that reproduces the MP3 file but the reproducer cannot sense the MP2 file. Therefore, when the broadcasting receiving apparatus 100 stores the audio data of the MP2 file type, if the MP3 file extension is added to the audio data of the MP2 file type, the reproducer that reproduces the MP3 file can easily sense the audio data and reproduce the audio data.

The output unit 160 includes a displayer and/or a speaker, and outputs the DMB signal processed by the broadcasting receiver 110. When the audio data stored in the storage unit 140 is reproduced, the controller 120 reads the audio data from the storage unit 140, transfers the read audio data to the decoder 115, and controls the decoder 115 to decode the audio data and produce the decoded audio data to the output unit 160.

FIG. 2 illustrates multiplexing of data for audio service, packet data for data service, and data for video service to a main service channel (MSC) 230. Referring to FIG. 2, a digital multimedia broadcasting transmission frame includes a synchronization channel (SC) 210, a fast information channel (FIC) 220, and the MSC 230. The data for audio service, packet data for data service, and data for video service are carried in the MSC 230. The packet data for data service can be carried in the MSC 230 via a packet mode, and in the point of the data for audio service. The data included in the point of the data for audio service is program associated data (PAD). For example, when a singer's photo or profile data is carried in audio data during music broadcasting, the singer's photo or profile data is carried in a PAD field.

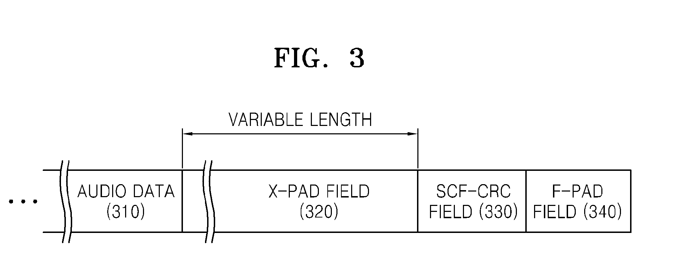

FIG. 3 illustrates PAD carried in the data for audio service. Referring to FIG. 3, when audio data 310 is transmitted using a stream, a variable length of extended program associated data (X-PAD) 320, scale factor error check (SCF-CRC) 330, and fixed program associated data (F-PAD) 340 are added to the audio data 310.

Data used to determine a turning point discriminating audio and speech of the F-PAD 340 according to an embodiment of the present invention.

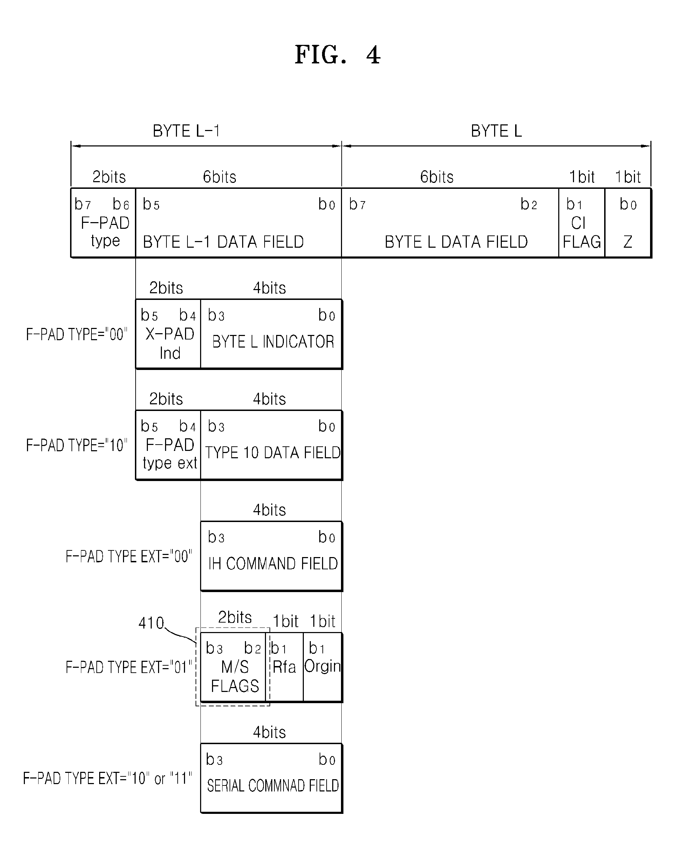

FIG. 4 illustrates a F-PAD field of a DMB transmission frame according to an embodiment of the present invention. Referring to FIG. 4, BYTE L-1 is a 1-byte field separated into a 2-bit F-PAD type field and a 6-bit BYTE L-1 data field and is time-multiplexed and transferred. The 2-bit F-PAD type field indicates contents of a BYTE L-1 data field. When the F-PAD type is 10, and a F-PAD type extension is 01, it indicates an M/S display. An M/S flag 410 is included in the F-PAD type extension. The M/S flag 410 indicates whether audio includes music or speech or provides the M/S display. The broadcasting receiving apparatus according to an embodiment of the present invention determines a time when a value of the M/S flag of the F-PAD field analyzed in the decoder 115 of the broadcasting receiver 110 is changed as a turning point where music and speech are separated.

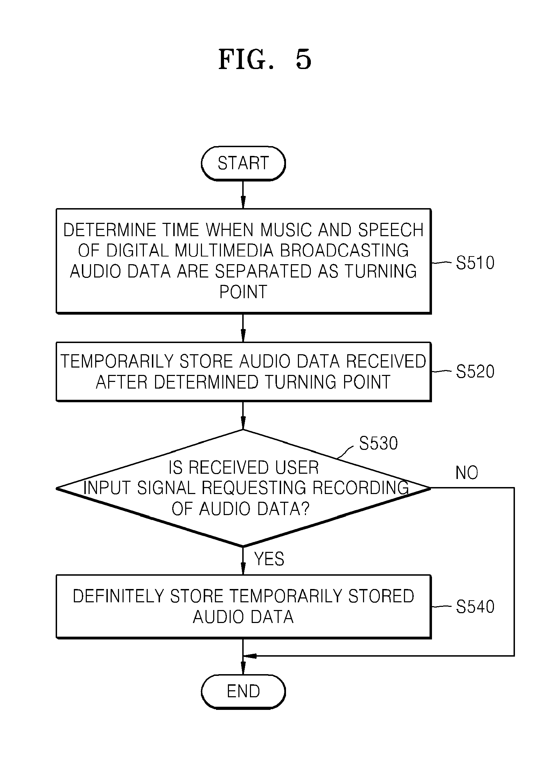

FIG. 5 is a flowchart illustrating a method of storing DMB audio data in the broadcasting receiving apparatus illustrated in FIG. 1 according to an embodiment of the present invention. Referring to FIG. 5, with regard to the DMB audio data included in a digital broadcasting signal processed by the broadcasting receiving unit 110, the controller 120 determines a turning point where music and speech are separated (Operation 510). The controller 120 determines a time when an M/S flag of a F-PAD field of an audio stream transmitted via a DMB signal is changed as the turning point. Also, the controller 120 can determine a time when mute data is temporarily output from decoded audio data as the turning point.

The controller 120 controls audio data received after the determined turning point to be temporarily stored in the storage buffer 130 (Operation 520). When a user input signal requesting recording of the audio data is received (Operation 530), the controller 120 stores the audio data temporarily stored in the storage buffer 130 to the storage unit 140 (Operation 540). In detail, the controller 120 stores the audio data received from the turning point to a present time when the user input signal is received to the storage unit 140, controls so that audio data from the present time is processed in the broadcasting receiving unit 110, and controls so that the processed audio data is stored in the storage unit 140. Also, the controller 120 adds an MP3 file extension to an audio data file and controls so that the audio data file with the MP3 file extension is stored.

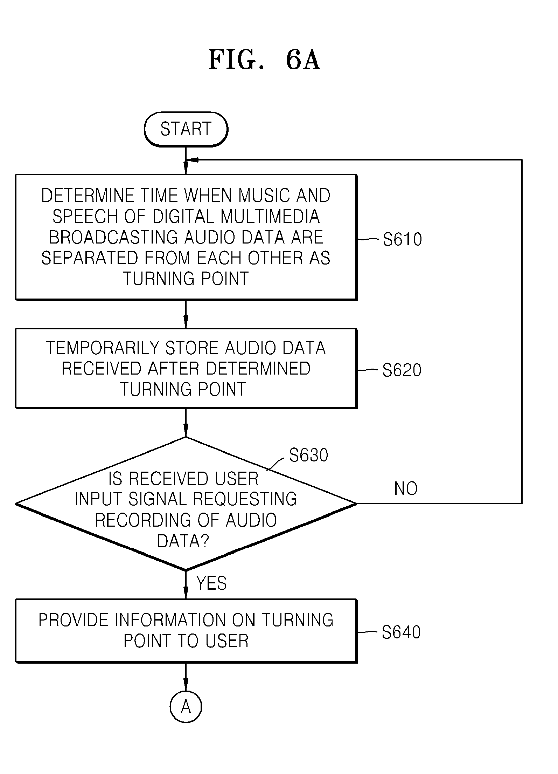

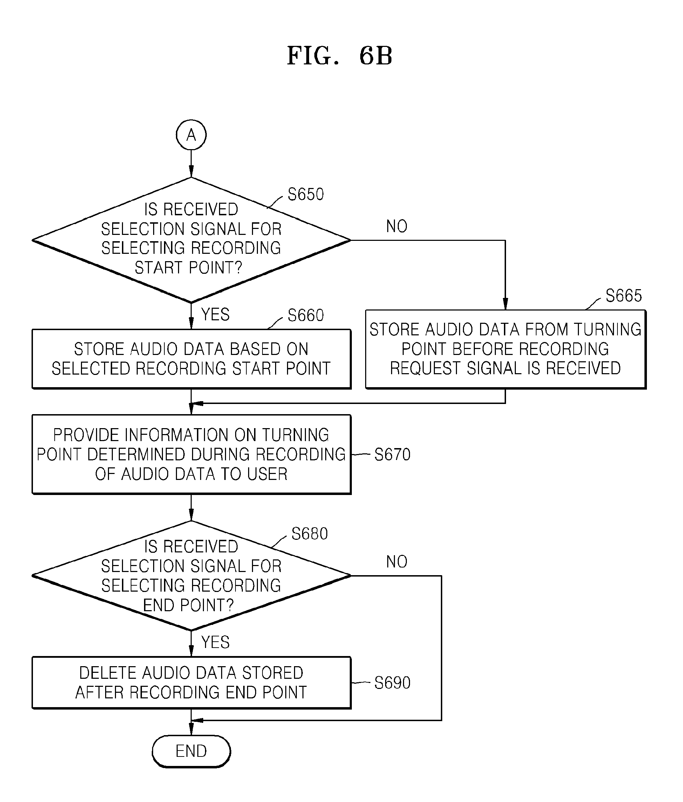

FIGS. 6A and 6B are flowcharts illustrating a method of storing DMB audio data in the broadcasting receiving apparatus illustrated in FIG. 1 according to another embodiment of the present invention. The broadcasting receiving apparatus according to an embodiment of the present invention uses this method of storing DMB audio data so that a user can select a start point and/or an end point of audio data.

Referring to FIG. 6A, with regard to a digital broadcasting signal processed by the broadcasting receiver 110, the controller 120 determines a time when music and speech of the digital multimedia broadcasting audio data are divided as a turning point (Operation 610), and the controller 120 temporarily stores audio data received after the determined turning point in the storage buffer 130 (Operation 620).

When a user input signal requesting recording of audio data via the user interface 150 is received (Operation 630), the controller 120 provides information on the turning point to the user in order to select a recording start point of the audio data (Operation 640). The controller 120 can determine a plurality of turning points and provide information on the plurality of turning points. Therefore, the controller 120 constitutes a screen in the form of a list with information on how many minutes or seconds elapse after broadcasting starts and provides the information on the turning point to the output unit 160.

When a selection signal for selecting the recording start point based on the information on the turning point is received via the user interface 150 (Operation 650), the controller 120 stores audio data based on the selected recording start point (Operation 660). More specifically, the controller 120 stores the audio data temporarily stored in the storage buffer 130 from the recording start point to a present time to the storage unit 140, and stores audio data in the storage unit 140 from the present time. When the selection signal for selecting the recording start point is not received, the controller 120 can store audio data from the turning point before the user input signal requesting recording of the audio data is received (Operation 665).

The controller 120 provides information on the turning point determined during the recording of the audio data to the user in order to select a recording end point (Operation 670). When a selection signal for selecting the recording end point is received via the user interface 150 using the information on the turning point (Operation 680), the controller 120 deletes audio data stored in the storage unit 140 after the recording end point in order to record audio data by the selected recording end point (Operation 690).

The present invention can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be distributed network coupled computer systems so that the computer readable code is stored and executed in a distributed fashion.

According to embodiments of the present invention, when a user stores digital multimedia broadcasting (DMB) audio data, the user can effectively store desired audio data only using a broadcasting receiving apparatus and method.

Also, using the broadcasting receiving apparatus and method of an embodiment of the present invention, DMB audio data can be transformed to easily reproduce a recording file of the DMB audio data via an MP3 player.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcasting receiving apparatus storing digital multimedia broadcasting (DMB) audio data, the apparatus comprising:
a broadcasting receiver (110) operable to process a received digital multimedia broadcasting signal;
a controller (120) operable to determine a time when music and speech of audio data received via the digital multimedia broadcasting signal are separated from each other as a turning point;
a storage buffer (130) operable to temporarily store audio data received after the determined turning point;
a storage unit (140) operable to store the audio data temporarily stored in the storage buffer; and
a user interface (150) operable to receive a user input signal requesting recording of the audio data and transferring the user input signal to the controller (120),
wherein the controller (120) is operable to store the audio data temporarily stored in the storage buffer (130) in the storage unit (140) after receiving the user input signal from the user interface (150).

2. The apparatus according to claim 1, wherein the controller (120) is operable to determine a time when music/speech (M/S) flags included in F-PAD of an audio stream transmitted via the digital multimedia broadcasting signal are changed as the turning point.

3. The apparatus according to claim 1 or 2, wherein the broadcasting receiver is operable to decode the audio data, and
the controller (120) is operable to determine a time when mute data is temporarily output from the decoded audio data as the turning point.

4. The apparatus according to any preceding claim, wherein the controller (120) is operable to control the storage unit (140) to store audio data output by the broadcasting receiver after receiving the user input signal requesting recording of the audio data from the user interface (150).

5. The apparatus according to any preceding claim, wherein the controller (120) is operable to write the determined turning point, provide information on the written turning point to a user to select a recording start point of the audio data, receive a selection signal for selecting the recording start point of the audio data, and store the audio data in the storage unit (140) based on the selection signal.

6. The apparatus according to claim 5, wherein when the selection signal for selecting the recording start point of the audio data is received from the user interface (150), the controller (120) is operable to store the audio data temporarily stored in the storage buffer (130) from the recording start point of the audio data to a present time to the storage unit, and store audio data received by the broadcasting receiver from the present time in the storage unit (140).

7. The apparatus according to any preceding claim, wherein the controller (120) is operable to write the determined turning point during the recording of audio data, provide information on the written turning point to the user to select a recording end point of the audio data, receive a selection signal for selecting the recording end point of the audio data, and delete audio data stored in the storage unit (140) after the selected recording end point.

8. The apparatus according to any preceding claim, wherein the recording of the audio data is identified by the turning point.

9. The apparatus according to any preceding claim, wherein the controller (120) is operable to add an MP3 file extension to a file of the audio data temporarily and store the audio data file with the MP3 file extension in the storage unit (140).

10. A method of storing digital multimedia broadcasting (DMB) audio data, the method comprising:
determining (S510) a time when music and speech of the digital multimedia broadcasting audio data received are separated from each other as a turning point;
temporarily storing (S520) audio data received after the turning point is determined; and
if a user input signal requesting recording of the audio data is received, storing (S530) the temporarily stored audio data.

11. The method according to claim 10, wherein a time when M/S flags (410) included in F-PAD of an audio stream transmitted via a digital multimedia broadcasting signal are changed is determined as the turning point.

12. The method according to claim 10 or 11, wherein the determining of the turning point comprises:
decoding the audio data, and
determining a time when mute data is temporarily output from the decoded audio data as the turning point.

13. The method according to any of claims 10-13, further comprising:
writing the determined turning point;
providing information on the written turning point to a user to select a recording start point of the audio data; and
if a selection signal for selecting the recording start point of the audio data is received, storing the audio data based on the selection signal.

14. The method according to claim 10-13, further comprising:
writing the determined turning point;
providing information on the written turning point to the user to select a recording end point of the audio data; and
if a selection signal for selecting the recording end point of the audio data is received, deleting audio data stored after the selected recording end point.

15. The method according to any of claims 10-14, wherein the recording of the audio data is identified by the turning point.

16. The method according to any of claims 10-15, wherein the storing of the temporarily stored audio data comprises: adding an MP3 file extension to a file of the temporarily stored audio data.

17. A computer-readable medium having embodied thereon a computer program for a method according to any of claims 10 - 16.
